# EUROPÄISCHE PATENTSCHRIFT

(11) **EP 2 013 520 B1**
(45) Veröffentlichungstag und Bekanntmachung des Hinweises auf die Patenterteilung: **01.09.2010**
(21) Anmeldenummer: 07722139.8
(22) Anmeldetag: 30.03.2007
(51) Int. Cl.: F16K 17/04

(54) **DRUCKBEGRENZUNGSVENTIL MIT DIREKTER DÄMPFUNG**
PRESSURE REGULATING VALVE WITH A DIRECT DAMPING ACTION
SOUPAPE DE LIMITATION DE PRESSION A AMORTISSEMENT DIRECT

(30) Priorität: 21.04.2006 DE 102006018542
(43) Veröffentlichungstag der Anmeldung: 14.01.2009
(73) Patentinhaber: Voss, Wolfgang, 58239 Schwerte (DE)
(72) Erfinder: Voss, Wolfgang, 58239 Schwerte (DE)
(74) Vertreter: Schulte & Schulte
(86) Internationale Anmeldenummer: PCT/DE2007/000581
(87) Internationale Veröffentlichungsnummer: WO 2007/121700

(56) Entgegenhaltungen:
- DE-A1-102004 005 745
- US-A- 3 344 806
- US-A- 4 699 171

## Beschreibung

Die Erfindung betrifft ein Druckbegrenzungsventil zum Schutz von Hydraulikaggregaten, insbesondere von hydraulischem Strebausbau gegen Gebirgsschlag und andere plötzlich auftretende Überlast mit einem Ventilgehäuse mit Anschluss, wobei die Eingangsseite und die Ausgangsseite des Ventilgehäuses durch ein gegen die Kraft einer Ventilfeder verschiebliches und einen Dichtring aufweisendes Verschlussteil mit feststehendem Kolben und darauf verschieblichem, hutförmigem Ventilfederteller voneinander getrennt und bei auftretender Überlast zum Abführen der Druckflüssigkeit über eine Innenbohrung im Anschluss und Kolben und über Radialbohrungen miteinander verbunden sind und wobei zwischen der Oberseite des Kolbens und der Unterseite des Ventilfedertellers eine durch die Innenbohrung mit der Eingangsseite verbundene Dämpfungskammer ausgebildet ist.

Ein derartiges Druckbegrenzungsventil ist der DE 10 2004 005 745 A1 zu entnehmen. Derartige Druckbegrenzungsventile werden insbesondere im untertägigen Steinkohlenbergbau eingesetzt, um die zur Absicherung der Hohlräume im Streb, aber auch in der Strecke eingesetzten Schildausbaugestelle vor Gebirgsschlägen und anderen plötzlichen Überlastzuständen zu bewahren. Diese Druckbegrenzungsventile sind so ausgelegt und aufgebaut, dass bei Auftreten einer entsprechenden Überlast ein in einer Bohrung verschieblicher Ventilkolben gegen den Federteller gedrückt wird (DE 199 46 848 A1), wobei er bei entsprechend hoher Überlast den Federteller gegen die Kraft der Ventilfeder verschiebt und dabei einen Dichtring überfährt, bis die in ihm ausgebildeten Radialbohrungen eine Verbindung zwischen der Sackbohrung im Ventilkolben und den Austrittsbohrungen herstellt. Die Druckflüssigkeit kann dann schnell abfließen, sodass das entsprechende Hydraulikaggregat entlastet wird und das Druckbegrenzungsventil wieder schließt. Da bei diesen einfacheren Druckbegrenzungsventilen aufgrund vorgeschalteter Einrichtungen Schwingungen im System nicht immer vermieden werden können, ist nach der DE 10 2004 005 745 A1 ein feststehender, d. h. mit dem Anschluss verbundener Kolben vorgesehen, auf dem der eigentliche Ventilfederteller verschieblich angeordnet ist und dabei die im Kolben ausgebildeten Radialbohrungen überfährt bzw. freigibt, sodass die Druckflüssigkeit dann durch im Boden des Ventilgehäuses ausgebildete Austrittsbohrungen abfließen kann. Im Kolben ist eine lange Drosselbohrung ausgebildet, die die zwischen Kolben und Ventilfederteller ausgebildete Dämpfungskammer direkt mit dem Systemdruck beaufschlagt bzw. verbindet. Dies bedeutet, dass die unter Systemdruck stehende Hydraulikflüssigkeit beim Überlastfall nicht nur dafür sorgt, dass der Federteller angehoben und die Radialbohrungen freigelegt werden, sondern dass gleichzeitig über die Drosselbohrung auch die Dämpfungskammer mit gefüllt wird, sodass bei Entlastung ein Einfahren des Federtellers nur begrenzt möglich ist, d. h. unter gleichzeitigem Herausdrücken der Druckflüssigkeit aus der Dämpfungskammer über die Drosselbohrung. Dadurch werden Schwingungen im System erschwert. Es hat sich allerdings herausgestellt, dass durch die besondere Ausbildung der Drosselbohrung, insbesondere ihrer Länge eine Reaktion insbesondere bei schnelleren Schwingungen praktisch nicht möglich ist. Außerdem ist das Abführen der Druckflüssigkeit über die im Boden bzw. in der Anschlussscheibe des Ventilgehäuses ausgebildeten Austrittsbohrungen unbefriedigend. Diese so ausgebildeten Druckbegrenzungsventile erfüllen somit nicht alle Sicherheitsanforderungen und führen nicht immer zur gewünschten direkten Dämpfung.

Der Erfindung liegt daher die Aufgabe zugrunde, bei im untertägigen Bergbau und ähnlichen Industriebereichen eingesetzten Druckbegrenzungsventilen nachteilige Schwingungen beim Öffnen und Schließen möglichst gänzlich zu unterbinden.

Die Aufgabe wird gemäß der Erfindung dadurch gelöst, dass die Dämpfungskammer über eine dreistufige Innenbohrung mit der Eingangsseite verbunden ist, wobei nur die oberste Teilbohrung als Drosselbohrung ausgeführt ist, die als großvolumige Abflussbohrung dienende Teilbohrung bis geringfügig über die Radialbohrungen reicht und die mittlere Teilbohrung bis zur Drosselbohrung einen gegenüber der Abflussbohrung reduzierten Durchmesser und gegenüber der Drosselbohrung einen deutlich größeren Durchmesser aufweist.

Bei einem derart ausgebildeten Druckbegrenzungsventil ist zunächst einmal sichergestellt, dass die beim Ansprechen des Druckbegrenzungsventils mit hohem Druck in das Druckbegrenzungsventil hineingelangende Druckflüssigkeit sicher über die großvolumige Abflussbohrung und die Radialbohrungen abfließen kann, um so zu einer möglichst frühen Entlastung des nachgeordneten Hydraulikaggregates zu kommen. Gleichzeitig steht aber auch eine notwendige Druckflüssigkeitsmenge dem Dämpfungsbereich zur Verfügung, weil die dorthin führende mittlere Teilbohrung ein entsprechend vergrößertes Volumen bzw. einen vergrößerten Durchmesser aufweist. Die eigentliche Drosselbohrung selbst bildet nur den obersten Teilbereich der gesamten Innenbohrung, sodass in der Dämpfungskammer zwar immer Systemdruck ansteht, aufgrund der Kürze der Drosselbohrung aber auf Schwingungen eine schnelle Reaktion erfolgen kann. Dadurch werden auftretende Schwingungen sofort und vollständig unterbunden, sodass das eigentliche Druckbegrenzungsventil unbeeinflusst bleibt. Da die Schwingungen in aller Regel durch vorgeordnete Hydraulikaggregate erzeugt wurden, werden sie zwar auch auf das Druckbegrenzungsventil selbst übertragen, in ihm aber "unschädlich" gemacht. Wie schon erwähnt kann aber die für die Entlastung notwendige Druckflüssigkeitsmenge schnell abfließen und gelangt dabei, wie später noch erläutert wird, zunächst in den Ventilgehäuseinnenraum, um aus diesem dann auf dem kürzesten und schnellsten Wege abgeführt zu werden.

Nach einer zweckmäßigen Ausführung der Erfindung ist vorgesehen, dass die mittlere Teilbohrung am oberen Rand der Radialbohrungen mit einem trichterförmigen Ansatz an die Abflussbohrung anschließend ausgebildet ist. Die für die Übertragung des Systemdrucks in die Dämpfungskammer wichtige mittlere Teilbohrung wird durch diese Ausbildung immer ausreichend mit Druckflüssigkeit versorgt, die dann über die Teilbohrung und die kurze Drosselbohrung in die Dämpfungskammer hineinfließen kann. In diesem Bereich werden vorteilhaft auch eventuell schädliche Wirbel verhindert.

Die schädlichen Schwingungen des Ventils oder besser gesagt im Ventil werden gemäß der Erfindung dadurch verhindert, dass die Drosselbohrung eine die Schwingungen des Ventils bzw. des Ventilfedertellers verhindernde, zumindest aber erheblich reduzierte Länge, vorzugsweise 1/6 der Länge der mittleren Teilbohrung und einen entsprechend reduzierten Durchmesser aufweist. Dies bedeutet, dass innerhalb kurzer Zeit einerseits genügend Druckflüssigkeit mit hohem Druck in die Dämpfungskammer hineingelangt, andererseits aber über die Drosselbohrung auch in entsprechender Menge bei Schließen des Ventils wieder abfließt, allerdings entsprechend abgedrosselt, sodass die gewünschte Dämpfung schnell und sicher eintritt und für den notwendigen Zeitabschnitt. Schwingungen können so systematisch und sicher bekämpft werden.

Ein schnelles und sicheres Abströmen der über die Innenbohrung und die Radialbohrungen strömenden Druckflüssigkeit wird dadurch erreicht, dass der Anschluss über eine Anschlussscheibe mit dem Ventilgehäuse verbunden ist und dass die Federstellschraube mit einer als Austrittsbohrung für die abströmende Druckflüssigkeit dienenden Durchgangsöffnung ausgerüstet ist. Abweichend vom Stand der Technik wird somit Druckflüssigkeit einfach in das Ventilgehäuse hineingeleitet, sodass zunächst einmal in diesem Bereich schon einmal eine Entspannung erfolgt, ohne dass die Gefahr besteht, dass hochgespannte Druckflüssigkeit in das Streb gelangt. Die bereits im Ventilgehäuse etwas entspannte Druckflüssigkeit gelangt vielmehr nun nach dem Durchströmen des gesamten Ventilgehäuses über die Durchgangsöffnung in der Federstellschraube ins Freie. Ein schnelles und gleichmäßiges Abführen ist so gewährleistet.

Um zu vermeiden, dass Schmutz in das Innere des Ventilgehäuses durch die Durchgangsöffnung hindurch gelangt, ist vorgesehen, dass die Durchgangsöffnung in der Federstellschraube über einen am oberen Rand des Ventilgehäuses fixierten Schutzdeckel abgedeckt ist. Die hier bereits entspannte Druckflüssigkeit kann so weitgehend gleichmäßig aus dem Ventilgehäuse herausströmen und zwar unter dem Schutzdeckel hindurch, der aber seine Funktion des Abdeckens der Durchgangsöffnung voll erfüllen kann.

Aufgrund der in der Federstellschraube vorgesehenen Durchgangsöffnung, kann die eigentliche Federstellschraube nicht für die Führung der Ventilfeder eingesetzt werden. Vielmehr ist es erfindungsgemäß vorgesehen, dass die Federstellschraube eine die Ventilfeder aufnehmende und führende Federbohrung aufweist, die in die reduziert ausgebildete Durchgangsöffnung übergeht. Damit ist gleichzeitig auch die Möglichkeit geschaffen, dass die Druckflüssigkeit durch die Feder hindurch, aber auch an ihr vorbei in die Durchgangsöffnung hineinströmen kann. Der obere Teil der Ventilfeder ist so sicher geführt, der am unteren Teil durch den entsprechend aufgewölbten Federteller zusätzlich geführt ist.

Das Aufschieben des hutförmigen Ventilfedertellers auf dem feststehenden Kolben wird bei der Montage dadurch erleichtert, dass der Ventilfederteller innenseitig seines Flachteils eine Abschrägung aufweist. Damit ist eine Art Führung beim Aufschieben des Ventilfedertellers auf den feststehenden Kolben gegeben.

Ebenfalls zur besseren Montage und der einfacheren Herstellung sieht die Erfindung vor, dass der Kolben am Übergang zum Anschluss eine Freidrehung aufweist. Damit ist gleichzeitig sichergestellt, dass der hutförmige Ventilfederteller über die Ventilfeder ausreichend weit in die Ruhestellung gedrückt und dort gehalten werden kann. Die Basis des Flachteils liegt somit dicht auf der Oberseite des Anschlusses an und eine wirksame Abdichtung der Radialbohrungen im feststehenden Kolben ist sichergestellt. Dies ist insbesondere gegeben, wenn die Freidrehung bis an den unteren Rand der Radialbohrungen heranreichend ausgeführt ist, um eben das sichere Aufsetzen des hutförmigen Ventilfedertellers zu erreichen.

Zur Erleichterung der Montage ist weiter vorgesehen, dass sowohl der Anschluss wie auch die Anschlussscheibe mit einer bzw. mit dem Ventilgehäuse korrespondierende Haltevorsprünge und Haltenasen aufweisen. Damit ist die Möglichkeit gegeben, sowohl die Anschlussscheibe wie den Anschluss von oben her in das Ventilgehäuse hineinzuschieben und dann über den Ventilfederteller und die eigentliche Ventilfeder im Gehäuse entsprechend festzulegen, ohne dass ein Verschrauben, Verstiften oder Ähnliches erforderlich wäre.

Ein sicheres Anheben des Ventilfedertellers und damit die notwendige Hochhubwirkung ist gesichert, wenn die Oberseite des Anschlusses die Oberseite der Anschlussscheibe geringfügig in Richtung Basis des Flachteils des Ventilfedertellers überragend ausgebildet ist. Die Unterseite oder besser gesagt die Basis des Flachteils liegt dann nur auf dem Anschluss bzw. auf der Oberseite des Anschlusses auf und beim Ansprechen des Ventils und Hochfahren des Ventilfedertellers wird so ein sicheres Anheben ohne die Gefahr eines Festsaugens des Federtellers ermöglicht.

Die Erfindung zeichnet sich insbesondere dadurch aus, dass ein Druckbegrenzungsventil insbesondere für den Einsatz im Steinkohlenbergbau und dort beim hydraulischen Strebausbau geschaffen ist, das schnell und sicher reagiert, wenn eine plötzliche Überlast auftritt und die auch dann, wenn Schwingungen auftreten, meist verursacht durch andere Hydraulikaggregate, diese Schwingungen schnell abgebaut bzw. ganz unschädlich gemacht werden, sodass sie auf das Innere des Druckbegrenzungsventils nicht schädlich einwirken können. Die relativ kurze Drosselbohrung am oberen Teil des feststehenden Kolbens und damit am oberen Ende der Innenbohrung stellt sicher, dass die Druckflüssigkeit ausreichend schnell durch die Drosselbohrung hindurch in die Dämpfungskammer gelangt, beim wieder Schließen des Ventils bzw. bei auftretenden Schwingungen aber ein gleichmäßiges Einfahren des Ventilfedertellers auf dem feststehenden Kolben sicherstellt, sodass die besagten Schwingungen nicht sich schädlich bemerkbar machen können. Durch die relativ kurze Drossel ist eine schnelle Reaktion auf auftretende Schwingungen möglich gemacht. Das Ventil spricht somit sofort an und kann seine Funktion voll erfüllen, wobei hinzu kommt, dass die durch die Innenbohrung und die Radialbohrungen freigesetzte Hydraulikflüssigkeit durch das Ventilgehäuse hindurch sicher abgeführt werden kann, um dann über die Durchgangsöffnung in der Federstellschraube ins Freie zu gelangen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Druckbegrenzungsventil im Schnitt in der Ruhestellung (rechts) und in der Ansprechstellung (links) und
- Figur 2: eine vergrößerte Wiedergabe des Anschlusses mit Kolben.

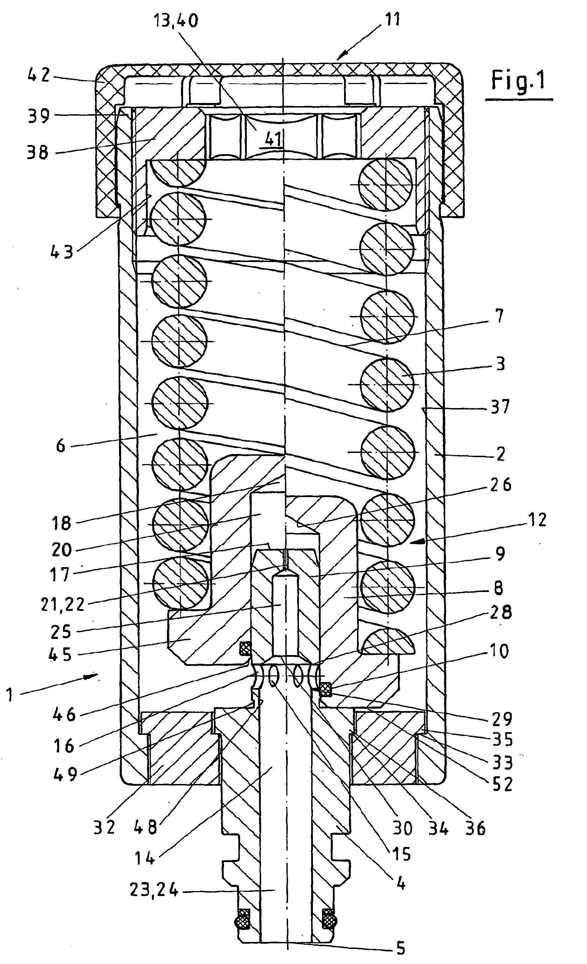

Figur 1 zeigt ein Druckbegrenzungsventil 1 im Schnitt, wobei deutlich wird, dass im Ventilgehäuse 2 eine Ventilfeder 3 so angeordnet ist, dass sie den Ventilfederteller 8, der hutförmig ausgebildet ist, auf dem Kolben 9 hält, der Teil des Anschlusses 4 ist bzw. fest mit dem Anschluss 4 verbunden ist. Der Anschluss 4 bildet die Eingangsseite 5 des Druckbegrenzungsventils 1, die mit dem hier nicht dargestellten Hydraulikaggregat verbunden ist. Tritt eine Überlast auf, so wird von der Eingangsseite 5 her die Druckflüssigkeit durch die Innenbohrung 14 bis zu den Radialbohrungen 15, 16 hochgedrückt, wobei diese Hydraulikflüssigkeit gleichzeitig durch die Innenbohrung 14 hindurch auch die Dämpfungskammer 20 mit dem Systemdruck verbindet bzw. diese Dämpfungskammer 20 füllt. Sobald dann der Ventilfederteller 8 gegen den Druck der Ventilfeder 3 so weit hochgefahren ist, dass die Radialbohrungen 15, 16 frei werden, spritzt die Hydraulikflüssigkeit bzw. die Druckflüssigkeit in den Ventilgehäuseinnenraum 6 hinein und wird durch diesen und auch durch den Ventilfederinnenraum 7 in Richtung Ausgangsseite 11 und damit in Richtung Federstellschraube 38 geführt und über die Austrittsöffnung 13 bzw. Austrittsöffnung 40 in die Umgebung abgeführt. Diese Austrittsöffnung 40 bzw. die Durchgangsöffnung 41 ist durch einen Schutzdeckel 42 abgedeckt, sodass Schmutz nicht in den Ventilgehäuseinnenraum 6 gelangen kann.

Ein Undicht werden des Druckbegrenzungsventils 1 wird dadurch verhindert, dass die Innenbohrung 14 mit den Radialbohrungen 15, 16 über einen Dichtring 10 abgedichtet ist, sodass die Druckflüssigkeit nur dann über die Radialbohrung 15, 16 abfließen kann, wenn der hutförmige Ventilfederteller 8 entsprechend hoch gegen die Kraft der Ventilfeder 3 verfahren ist.

Die schon angesprochene Dämpfungskammer 20 ist zwischen der Oberseite 17 des Kolbens 9 und der Unterseite 18 des Ventilfedertellers 8 ausgebildet und zwar an dem oberen hutförmigen Teil des Ventilfedertellers 8. Diese Dämpfungskammer 20 steht mit der obersten Teilbohrung 21 in Form der Drosselbohrung 22 mit der mittleren Teilbohrung 25 und dann wieder mit der als Abflussbohrung 24 dienenden Teilbohrung 23 in Verbindung, sodass der Systemdruck über diese dreistufige Innenbohrung 14 mit der Dämpfungskammer 20 in Verbindung steht. Die Dämpfungskammer 20 steht somit immer unter Systemdruck. Damit ist auch bei Ansprechen des Ventils und wieder Einfahren der Ventilfeder 3 eine entsprechende Dämpfung automatisch verbunden. Mit 26 ist der obere Teil der Dämpfungskammer 20 bezeichnet, wobei aber auf diesen spitz zulaufenden Kammeransatz 26 zur Not auch verzichtet werden kann. Es handelt sich hier um eine Fertigungsmaßnahme.

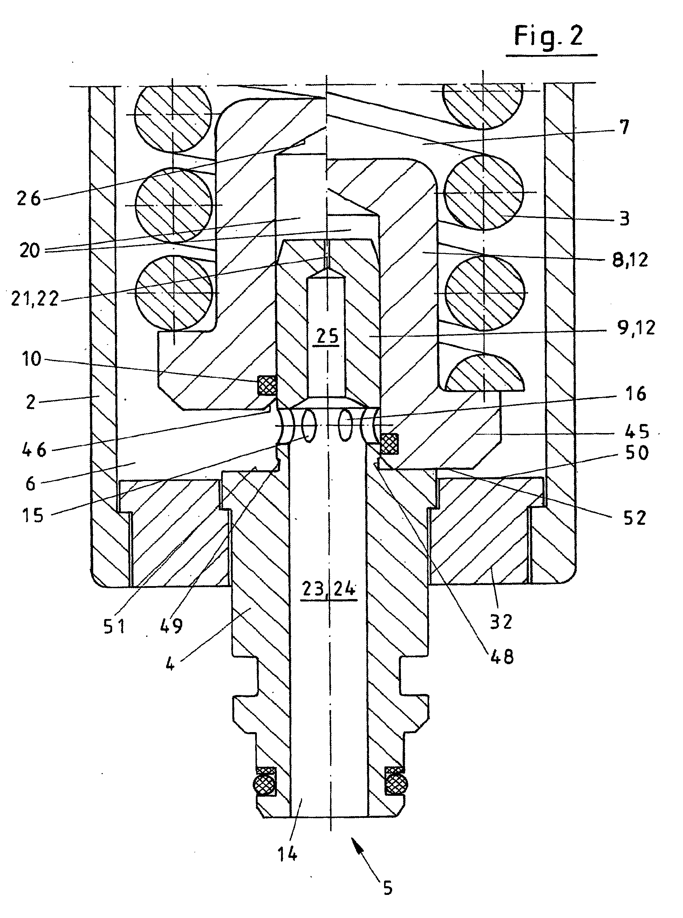

Die über die Innenbohrung 14 bzw. die Teilbohrung 23 anstehende Druckflüssigkeit wird beim Öffnen des Druckbegrenzungsventils 1 über die Radialbohrung 15, 16 in den Ventilgehäuseinnenraum 6 geführt. Um sicherzustellen, dass die Druckflüssigkeit auch dann in der mittleren Teilbohrung 25 und damit der Drosselbohrung 22 steht, ist im Bereich des oberen Randes 28 der Radialbohrung 15, 16 ein trichterförmiger Ansatz 30 ausgebildet, in den dann die eigentliche mittlere Teilbohrung 25 übergeht. Erkennbar ist in Figur 1 und auch in Figur 2 weiter, dass der Dichtring 10 so angeordnet und angebracht ist, dass im Schließzustand des Druckbegrenzungsventils 1 der untere Rand 29 der Radialbohrungen 15, 16 mit abgedeckt ist. Die Druckflüssigkeit kann in diesem Zustand dann nicht am Dichtring 10 vorbei abfließen, allenfalls durch den Schlitz zwischen Kolben 9 und hutförmigem Ventilfederteller 8, wobei dann diese geringen Mengen an Druckflüssigkeit in den Bereich der Dämpfungskammer 20 geleitet würden.

Bei der Montage eines derartigen Druckbegrenzungsventils 1 werden in das leere Ventilgehäuse 2 von oben her die Anschlussscheibe 32 und der Anschluss 4 geschoben. Diese sind miteinander und mit der Innenwand 37 des Ventilgehäuses 2 über Haltevorsprünge 33, 34 bzw. Haltenasen 35, 36 verbunden bzw. sind so ineinander gesteckt, dass sie nach dem Aufschieben des hutförmigen Ventilfedertellers 8, Aufsetzen der Ventilfeder 3 und Verspannen der Ventilfeder 3 über die Federstellschraube 38 abschließend festgesetzt sind. Erkennbar ist insbesondere in Figur 2 auch, dass die Oberseite 51 des Anschlusses 4 etwas über die Oberseite 50 der Anschlussscheibe 32 vorsteht, sodass die Basis 52 des Flachteils 45 nur auf der Oberseite 51 aufliegt, was insbesondere Figur 2 sehr gut verdeutlicht.

Am oberen Rand 39 des Ventilgehäuses 2 ist ein Schutzdeckel 42 vorgesehen und zwar so angeordnet und ausgebildet, dass die Druckflüssigkeit nach Verlassen der Durchgangsöffnung 41 an diesem Schutzdeckel 42 vorbei ausströmen kann, ohne dass die Gefahr besteht, dass Schmutzteile auf diesem Wege in den Ventilgehäuseinnenraum 6 gelangen. Die Federstellschraube 38 weist die schon erwähnte Durchgangsöffnung 41 auf, sodass über diese Austrittsöffnung insgesamt die Druckflüssigkeit am Schutzdeckel 42 vorbei in die Atmosphäre gelangen kann. Die Federstellschraube 38 selbst ist so ausgebildet, dass auf der Unterseite eine Federbohrung 43 vorhanden ist, die zur Führung der Ventilfeder 3 dient.

Auf der Innenseite des hutförmigen Ventilfedertellers 8 auf der eine Abschrägung 46 vorgesehen ist, die das Aufschieben des Ventilfedertellers 8 auf den Kolben 9 erleichtert. Dies wird noch dadurch begünstigt, dass der Kolben 9 am freien Ende ebenfalls eine dieses Aufschieben begünstigende Schräge aufweist.

Ein genaues Aufsitzen des hutförmigen Ventilfedertellers 8 auf dem Kolben 9 gemäß Figur 1 und Figur 2 wird dadurch begünstigt, dass im Übergang 48 vom Kolben 9 zum Anschluss 4 eine Freidrehung 49 vorgesehen ist, was insbesondere auch Figur 2 entnommen werden kann.

Bei auftretender Überlast erhöht sich der Druck auf den Ventilfederteller 8, da Druckflüssigkeit über die dreistufige Innenbohrung 14 bis in die Dämpfungskammer 20 gelangt. Der Ventilfederteller 8 wird gegen die Kraft der Ventilfeder 3 in Richtung Federstellschraube 38 angehoben, sodass er die in Figur 1 links dargestellte Position einnimmt, bei der nun die Radialbohrungen 15, 16 frei sind. Damit ist die Möglichkeit gegeben, dass die anstehende Druckflüssigkeit über die Teilbohrung 23 und die Radialbohrungen 15, 16 in den Ventilgehäuseinnenraum 6 und von dort aus dem Druckbegrenzungsventil 1 herausströmt und zwar über die Austrittsöffnung 40 bzw. die Durchgangsöffnung 41. Die Dämpfungskammer 20 steht nach wie vor mit dem Systemdruck, also der ankommenden Druckflüssigkeit in Verbindung und ist dementsprechend auch mit Druckflüssigkeit ausgefüllt. Tritt nun eine Entlastung ein, weil genügend Druckflüssigkeit abgelaufen ist oder tritt ein Schwingen auf, verursacht durch ein hydraulisches Drittaggregat, versucht die Ventilfeder 3 den Ventilfederteller 8 wieder in die Ausgangsstellung zurückzuschieben, wie sie rechts bei den Figuren 1 und 2 wiedergegeben ist. Aufgrund der gefüllten Dämpfungskammer 20 ist dies ohne weiteres nicht möglich, sondern vielmehr nur durch Verdrängen der Druckflüssigkeit, die in der Dämpfungskammer 20 ansteht. Ein direktes Abfließen ist dabei nicht möglich, weil das obere Ende, d. h. die oberste Teilbohrung den Aufbau einer Drosselbohrung und die Wirkung einer Drosselbohrung 22 aufweist. Dies bedeutet, dass die Druckflüssigkeit in der Dämpfungskammer 20 nur begrenzt langsam abfließen kann, sodass dementsprechend auch der Ventilfederteller 8 nur langsam absinkt und die Ventilfeder 30 nur geringfügig und gleichmäßig entspannen kann. Ein Schwingen ist dann für den Ventilfederteller 8 bzw. die Ventilfeder 3 nicht möglich. Dies gilt für den gesamten Absatzweg der Druckflüssigkeit, die aus der Dämpfungskammer 20 über die Drosselbohrung 22 abgeführt werden muss, um ein Rückführen des Ventilfedertellers 8 in die in Figur 1 und 2 rechts wiedergegebene Position zu ermöglichen.

Alle genannten Merkmale, auch die den Zeichnungen allein zu entnehmenden, werden allein und in Kombination als erfindungswesentlich angesehen.

## Patentansprüche

1. Druckbegrenzungsventil zum Schutz von Hydraulikaggregaten, insbesondere von hydraulischem Strebausbau gegen Gebirgsschlag und andere plötzlich auftretende Überlast mit einem Ventilgehäuse (2) mit Anschluss (4), wobei eine untere Eingangsseite (5) und eine obere Ausgangsseite (11) des Ventilgehäuses (2) durch ein gegen die Kraft einer Ventilfeder (3) verschiebliches und einen Dichtring (10) aufweisendes Verschlussteil (12) mit feststehendem Kolben (9) und darauf verschieblichem, hutförmigem Ventilfederteller (8) voneinander getrennt und bei auftretender Überlast zum Abführen der Druckflüssigkeit über eine Innenbohrung (14) im Anschluss (4) und Kolben (9) und über Radialbohrungen (15, 16) miteinander verbunden sind und wobei zwischen der Oberseite (17) des Kolbens (9) und der Unterseite (18) des Ventilfedertellers (8) eine durch die Innenbohrung (14) mit der Eingangsseite (5) verbundene Dämpfungskammer (20) ausgebildet ist,
**dadurch gekennzeichnet,**
**dass** die Dämpfungskammer (20) über eine dreistufige Innenbohrung (14) mit der Eingangsseite (5) verbunden ist, wobei nur die oberste Teilbohrung (21) als Drosselbohrung (22) ausgeführt ist, die als großvolumige Abflussbohrung (24) dienende Teilbohrung (23) bis geringfügig über die Radialbohrungen (15, 16) reicht und die mittlere Teilbohrung (25) bis zur Drosselbohrung (22) einen gegenüber der Abflussbohrung (24) reduzierten Durchmesser und gegenüber der Drosselbohrung (22) einen deutlich größeren Durchmesser aufweist.

2. Druckbegrenzungsventil nach Anspruch 1,
**dadurch gekennzeichnet,**
**dass** die mittlere Teilbohrung (25) am oberen Rand (28) der Radialbohrungen (15, 16) mit einem trichterförmigen Ansatz (30) an die Abflussbohrung (24) anschließend ausgebildet ist.

3. Druckbegrenzungsventil nach einem der vorhergehenden Ansprüche,
**dadurch gekennzeichnet,**
**dass** die Drosselbohrung (22) eine die Schwingungen des Ventils (1) bzw. des Ventilfedertellers (8) verhindernde, zumindest aber erheblich reduzierte Länge, vorzugsweise 1/6 der Länge der mittleren Teilbohrung (25) und einen entsprechend reduzierten Durchmesser aufweist.

4. Druckbegrenzungsventil nach einem der vorhergehenden Ansprüche,
**dadurch gekennzeichnet,**
**dass** der Anschluss (4) über eine Anschlussscheibe (32) mit dem Ventilgehäuse (2) verbunden ist und dass eine Federstellschraube (38) mit einer als Austrittsbohrung (13, 40) für eine abströmende Druckflüssigkeit dienenden Durchgangsöffnung (41) ausgerüstet ist.

5. Druckbegrenzungsventil nach Anspruch 4,
**dadurch gekennzeichnet,**
**dass** die Durchgangsöffnung (41) in der Federstellschraube (38) über einen am oberen Rand (39) des Ventilgehäuses (2) fixierten Schutzdeckel (42) abgedeckt ist.

6. Druckbegrenzungsventil nach einem der Ansprüche 4 und 5, **dadurch gekennzeichnet,**
**dass** die Federstellschraube (38) eine die Ventilfeder (3) aufnehmende und führende Federbohrung (43) aufweist, die in die reduziert ausgebildete Durchgangsöffnung (41) übergeht.

7. Druckbegrenzungsventil nach einem der vorhergehenden Ansprüche,
**dadurch gekennzeichnet,**
**dass** der Ventilfederteller (8) innenseitig seines Flachteils (45) eine Abschrägung (46) aufweist.

8. Druckbegrenzungsventil nach einem der vorhergehenden Ansprüche,
**dadurch gekennzeichnet,**
**dass** der Kolben (9) am Übergang (48) zum Anschluss (4) eine Freidrehung (49) aufweist.

9. Druckbegrenzungsventil nach Anspruch 8,
**dadurch gekennzeichnet,**
**dass** die Freidrehung (49) bis an den unteren Rand (29) der Radialbohrungen (15, 16) heranreichend ausgeführt ist.

10. Druckbegrenzungsventil nach einem der Ansprüche 4 bis 6,
**dadurch gekennzeichnet,**
**dass** sowohl der Anschluss (4) wie auch die Anschlussscheibe (32) mit einer bzw. mit dem Ventilgehäuse (2) korrespondierende Haltevorsprünge (33, 34) und Haltenasen (35, 36) aufweisen.

11. Druckbegrenzungsventil nach einem der Ansprüche 4 bis 6 und 10,
**dadurch gekennzeichnet,**
**dass** die Oberseite (51) des Anschlusses (4) die Oberseite (50) der Anschlussscheibe (32) geringfügig in Richtung Basis (52) des Flachteils (45) des Ventilfedertellers (8) überragend ausgebildet ist.

## Claims

1. A pressure relief valve for safeguarding hydraulic units, in particular hydraulic face support against rock burst and other suddenly occurring overload, having a valve housing (2) with connection (4), a lower inlet side (5) and an upper outlet side (11) of the valve housing (2) being separated from one another by a closure part (12), displaceable against the force of a valve spring (3) and having a sealing ring (10), with a fixed piston (9) and a cap-shaped valve spring plate (8) displaceable thereon and in the event of an overload occurring being connected to one another in order to drain off hydraulic fluid via an internal bore (14) in the connection (4) and the piston (9) and via radial bores (15, 16), and a damping chamber (20) connected to the inlet side (5) by the internal bore (14) being formed between the upper side (17) of the piston (9) and underside (18) of the valve spring plate (8),
**characterized in that**
the damping chamber (20) is connected to the inlet side (5) via a triple-stepped internal bore (14), only the uppermost bore section (21) being designed as a restriction bore (22), the bore section (23) serving as high-volume outlet bore (24) extending slightly above the radial bores (15, 16) and the middle bore section (25) up to the restriction bore (22) having a reduced diameter compared to the outlet bore (24) and a significantly larger diameter than the restriction bore (22).

2. The pressure relief valve according to Claim 1,
**characterized in that**
the middle bore section (25) at the upper edge (28) of the radial bores (15, 16) is designed with a funnel-shaped neck (30) adjoining the outlet bore (24).

3. The pressure relief valve according to any one of the preceding Claims,
**characterized in that**
the restriction bore (22) has a length which serves to prevent the oscillations of the valve (1) or the valve spring plate (8) but which is at least considerably reduced, preferably 1/6 of the length of the middle bore section (25) and a correspondingly reduced diameter.

4. The pressure relief valve according to any one of the preceding Claims,
**characterized in that**
the connection (4) is connected by a connection plate (32) to the valve housing (2) and that a spring adjustment screw (38) is equipped with a port (41) serving as outlet bore (13, 40) for a discharging hydraulic fluid.

5. The pressure relief valve according to Claim 4,
**characterized in that**
the port (41) in the spring adjustment screw (38) is covered by a protective cover (42) fixed to the upper edge (39) of the valve housing (2).

6. The pressure relief valve according to any one of Claims 4 and 5,
**characterized in that**
the spring adjustment screw (38) has a spring bore (43), which accommodates and guides the valve spring (3) and which merges into the reduced port (41).

7. The pressure relief valve according to any one of the preceding Claims,
**characterized in that**
the valve spring plate (8) has a bevel (46) on the inside of its flat part (45).

8. The pressure relief valve according to any one of the preceding Claims,
**characterized in that**
the piston (9) has a recess (49) at the transition (48) to the connection (4).

9. The pressure relief valve according to Claim 8,
**characterized in that**
the recess (49) is designed to extend up to the lower edge (29) of the radial bores (15, 16).

10. The pressure relief valve according to any one of Claims 4 to 6,
**characterized in that**
both the connection (4) and the connection plate (32) have retaining projections (33, 34) and retaining lugs (35, 36) corresponding to a or to the valve housing (2).

11. The pressure relief valve according to any one of Claims 4 to 6 and 10,
**characterized in that**
the upper side (51) of the connection (4) is designed to project beyond the upper side (50) of the connection plate (32) slightly towards the base (52) of the flat part (45) of the valve spring plate (8).

## Revendications

1. Soupape de limitation de pression pour la protection d'agrégats hydrauliques, en particulier de soutènement en taille hydraulique contre les coups de charge et toute autre surcharge soudaine avec une boîte de soupapes (2) présentant un raccord (4), étant donné qu'un côté d'entrée inférieur (5) et un côté de sortie supérieur (11) de la boîte de soupapes (2) sont séparés l'un de l'autre par une pièce de fermeture (12) déplaçable contre la force d'un ressort de soupape (3) et présentant une bague d'étanchéité (10), pièce de fermeture avec piston fixe (9) et cuvette de ressort de soupape (8) en forme de chapeau déplaçable sur ce dernier, et reliés l'un à l'autre en cas de surcharge pour l'évacuation du liquide hydraulique via un alésage intérieur (14) dans le raccord (4) et le piston (9) et via des alésages radiaux (15, 16), et étant donné qu'est formée entre le côté supérieur (17) du piston (9) et le côté inférieur (18) de la cuvette de ressort de soupape (8) une chambre d'amortissement (20) reliée au côté d'entrée (5) par l'alésage intérieur (14),
**caractérisée en ce que**
la chambre d'amortissement (20) est reliée par un alésage intérieur (14) à trois niveaux au côté d'entrée (5), étant donné que seul l'alésage partiel (21) le plus haut est réalisé comme alésage d'étranglement (22), l'alésage partiel (23) servant d'alésage d'évacuation (24) grand volume déborde légèrement les alésages radiaux (15, 16) et l'alésage partiel (25) central présente jusqu'à l'alésage d'étranglement (22) un diamètre réduit par rapport à l'alésage d'évacuation (24) et un diamètre nettement plus grand par rapport à l'alésage d'étranglement (22).

2. Soupape de limitation de pression selon la revendication 1,
**caractérisée en ce que**
l'alésage partiel (25) central est formé sur le bord supérieur (28) des alésages radiaux (15, 16) avec une embase (30) en forme d'entonnoir de manière à se raccorder à l'alésage d'évacuation (24).

3. Soupape de limitation de pression selon l'une quelconque des revendications précédentes,
**caractérisée en ce que**
l'alésage d'étranglement (22) présente une longueur qui empêche les vibrations de la soupape (1) ou de la cuvette de ressort de soupape (8), longueur toutefois au moins considérablement réduite, de préférence 1/6 de la longueur de l'alésage partiel central (25), et un diamètre réduit en conséquence.

4. Soupape de limitation de pression selon l'une quelconque des revendications précédentes,
**caractérisée en ce que**
le raccord (4) est relié à la boîte de soupapes (2) par un disque de raccordement (32), et **en ce qu'**une vis de réglage à ressort (38) est équipée d'un orifice de passage (41) servant d'alésage de sortie (13, 40) pour un liquide hydraulique s'écoulant vers la sortie.

5. Soupape de limitation de pression selon la revendication 4,
**caractérisée en ce que**
l'orifice de passage (41) dans la vis de serrage à ressort (38) est recouverte par un couvercle protecteur (42) fixé sur le bord supérieur (39) de la boîte de soupapes (2).

6. Soupape de limitation de pression selon l'une quelconque des revendications 4 et 5,
**caractérisée en ce que**
la vis de serrage à ressort (38) présente un alésage à ressort (43) qui accueille et guide le ressort de soupape (3), alésage à ressort qui passe dans l'orifice de passage (41) réduit.

7. Soupape de limitation de pression selon l'une quelconque des revendications précédentes,
**caractérisée en ce que**
la cuvette de ressort de soupape (8) présente sur le côté intérieur de sa partie plate (45) un chanfrein (46).

8. Soupape de limitation de pression selon l'une quelconque des revendications précédentes,
**caractérisée en ce que**
le piston (9) présente un évidement (49) à la transition (48) vers le raccord (4).

9. Soupape de limitation de pression selon la revendication 8,
**caractérisée en ce que**
l'évidement (49) est réalisé jusqu'au bord inférieur (29) des alésages radiaux (15, 16).

10. Soupape de limitation de pression selon l'une quelconque des revendications 4 à 6,
**caractérisée en ce que**
aussi bien le raccord (4) que le disque de raccordement (32) présentent des saillies de maintien (33, 34) et des taquets (35, 36) qui correspondent à une ou à la boîte de soupapes (2).

11. Soupape de limitation de pression selon l'une quelconque des revendications 4 à 6 et 10,
**caractérisée en ce que**
la face supérieure (51) du raccord (4) est formée de manière à déborder légèrement la face supérieure (50) du disque de raccordement (32) en direction de la base (52) de la partie plate (45) de la cuvette de ressort de soupape (8).
